# EUROPEAN PATENT APPLICATION

(11) **EP 2 669 443 A1**
(43) Date of publication of application: **04.12.2013**
(21) Application number: 13167429.3
(22) Date of filing: 13.05.2013
(51) Int. Cl.: E04B 1/98, E06B 5/12, F16K 17/16

(54) **Pressure relief device**

(30) Priority: 31.05.2012 NL 2008907
(71) Applicant: Holding Dinnissen B.V., 5971 DK Grubbenvorst (NL)
(72) Inventor: Maes, Mathieu Antoon Karel, 5971 DK Grubbenvorst (NL); Maes, Jeroen Adolf Karel, 5508 MP Veldhoven (NL)
(74) Representative: Veldman-Dijkers, Cornelia G. C.

(57) **Abstract**

A pressure relief device (1) for protecting a housing against overpressure in a space enclosed by the housing comprises at least one the sealing panel (3)which, in use, has a side facing the enclosed space and a side remote from the enclosed space. The sealing panel is movable between a first, closed position and a second, open position. In the closed position, an opening in the housing can be closed by means of the sealing panel. The pressure relief device comprises a zone (5) that can be deformed by overpressure in the space enclosed by the housing, a sensor device (6) for determining a deformation and/or a deformation speed of the deformable zone, which sensor device is located on a side of the deformable zone remote from the enclosed space, and a release device (4) connected to the sensor device for unlocking the sealing panel when the deformation and/or the deformation speed of the deformable zone exceed(s) a predetermined reference value.

## Description

The invention relates to a pressure relief device for protecting a housing against overpressure in a space enclosed by the housing, comprising at least one sealing panel which, in use, has a side facing the enclosed space and a side remote from the enclosed space, which sealing panel is movable between a first, closed position and a second, open position, in which closed position an opening in the housing can be closed by means of the sealing panel.

Dust and powder explosions frequently occur in spaces where operators work with fine dust or powder or where dusty or powdery products are stored. The explosions that can occur in such environments can be rather heavy, and may even result in a situation where a machine and the space in which the machine is disposed cannot be used for some time because the damage must first be repaired. Consequently, a pressure relief device is used for protecting such spaces.

EP 0 518 698 already shows such a pressure relief device of a space. A panel is pivotally connected to a frame of a housing that bounds the space. The panel is held closed by a calibrated magnet, which is disposed in a holder. The holder is in turn connected to the frame. The magnet cooperates with a metal striker plate which is mounted to a side of the panel.

The magnetic force of the magnet can be adjusted by placing one or more non-magnetic shims on the striker plate. When the pressure inside the housing exceeds the magnetic force between the magnet and the striker plate, the pressure relief device will come into operation and pivot the panel to the open position.

The known pressure relief device can be reused because the panel can return to its original position after an explosion. The magnet that is provided will resume its function in that case.

A drawback of the above pressure relief device is that the magnetic force needed to enable the pressure relief device to function properly is difficult to set.

It is an object of the present invention to provide a pressure relief device in which a reference value for a pressure at which a panel will open can be set in a simple manner. Another object of the invention is to provide an alternative for a pressure relief device, which can be reused and which can be placed into service again soon after an explosion.

The object is achieved with the pressure relief device according to the invention in that the pressure relief device comprises a zone that can be deformed by overpressure in the space enclosed by the housing, a sensor device for determining a deformation and/or a deformation speed of the deformable zone, which sensor device is located on a side of the deformable zone remote from the enclosed space, and a release device connected to the sensor device for unlocking the sealing panel when the deformation and/or the deformation speed of the deformable zone exceed(s) a predetermined reference value.

When the pressure relief device is in use, and when a pressure build-up occurs, for example as a result of a dust or powder explosion in the housing on which the pressure relief device is provided, the pressure that has built up attempts to find a way of escaping from the housing. The deformable zone provides a possibility of deformation, so that the first visible signs of an explosion in the space are a deformation and a speed of deformation of the deformable zone. The speed of deformation of the deformable zone is at least substantially proportional to the speed of the pressure build-up in the housing. The pressure in a housing that contains wood flour, for example, can increase by 200 bar per second during an explosion.

The sensor device will detect said deformation and/or the deformation speed and send a signal to the release device. The release device will unlock the sealing panel, which will subsequently be moved in the direction of the side remote from the housing under the influence of the pressure in the housing. A pressure decrease will then occur in the housing, preventing other parts of the housing, which are not made of an easily deformable material, from being damaged.

The predetermined reference value can be set in a simple manner, in particular if the reference value is electronically stored in the pressure relief device, and especially if said reference value is stored in a control unit. The reference value can for example be set at a value between 10 and 12 bar. The normal, atmospheric pressure as a rule is about 1 bar.

Under the influence of the pressure in the housing, the sealing panel moves in the direction of the side remote from the enclosed space. An overpressure that prevails in a housing can be easily decreased in this manner.

When the pressure relief device is in use, and the pressure in the space enclosed by the housing is lower than the reference value, the sealing panel will be in the closed position. In said closed position, the sealing panel closes the housing, so that in the operative state the contents of the enclosed space cannot be contaminated with substances from outside, and the contents of the enclosed space cannot leave the housing. The sealing panel is locked by the release mechanism so as to prevent accidental opening of the panel.

The locking engagement is released by moving a release mechanism, which may comprise a number of interconnected rods, from a closing position to a release position. When the release mechanism is in the release position, the sealing panel can move freely and the elevated pressure in the space can readily escape from the housing through the opening in the housing that has been released by the sealing panel to the outside of the housing.

The sensor device is not disposed in the space that is enclosed by the housing. In said spaces, materials that can cause an explosion, such as powdery materials, are frequently stored and used. When the sensor device is mounted on the outside of such a housing, the sensor device will not be in contact with said materials. The sensor device cannot be contaminated by said materials, or in any case at least less easily, therefore, resulting in a long life of the sensor device and a less malfunction-prone operation thereof.

One embodiment of the pressure relief device according to the invention is **characterised in that** the deformable zone comprises a cloth or a plate.

The deformable zone may comprise a plate or a cloth which is capable of deformation under pressure, for example in a direction perpendicular to the surface of the plate or the cloth. The plate is preferably made of a material that deforms more easily than the material of which the housing is made, and also more easily than the sealing panel. Thus, the plate material may be thinner, or a plate material which is more flexible and easier to bend may be used. In case a cloth is used, the cloth may be stretched taut in an opening in the pressure relief device.

One embodiment of the pressure relief device according to the invention is **characterised in that** the release device is provided with a rod that is held in a closing position by spring force and with a locking pawl that is connected to the rod in a locking position.

As soon as it is indicated by means of a signal from the sensor that the release mechanism can be unlocked, the locking pawl is moved out of engagement with the rod. The rod is then moved to a release position under the influence of the spring force, in which position the sealing panel can move freely from the closed position to the open position, and vice versa. The bias provided by the spring force has the advantage that the force that is to be exerted on the rod can be applied in a relatively simple manner. The spring force can be realised by means of a coil spring, for example, but any suitable type of spring can be used here.

One embodiment of the pressure relief device according to the invention is **characterised in that** the release device comprises an electromagnetic control unit.

This is a high-speed form of control. If the sensor device has determined, whether or not by electronic means, that the pressure in the housing is too high, the sensor device will send a signal to the release device. Upon receipt of said signal, an electromagnetic connection between an electromagnet and the release mechanism is broken. After said electromagnetic connection has been broken, the release device is moved to the release position under the influence of the bias provided by the spring force stored in the spring.

One embodiment of the pressure relief device according to the invention is **characterised in that** the pressure relief device comprises a control device for receiving and processing sensor signals and emitting control signals to the release device.

A control device is advantageous for receiving and processing the sensor signals that are received. The received signals are compared with a predetermined reference value stored in the control device, and the control device will send a control signal to the release device when the reference value of the pressure is exceeded.

Furthermore it is possible, using the control device, to record the development of the pressure in the housing over time, and on the basis of the pressure build-up over time it may be decided to send a control signal to the release device. Furthermore it is possible, using the control device, to send a signal to a person or a computer device that is responsible for operating the pressure relief device when a predetermined reference value is exceeded, so that necessary steps can be taken.

One embodiment of the pressure relief device according to the invention is **characterised in that** the sealing panel comprises at least one seal for preventing the egress of dust from the space enclosed by the housing.

In the closed position, the sealing panel seals an opening in the housing. Small chinks may develop around the sealing panel. Said chinks may be large enough to allow fine powder and/or fine dust particles to pass therethrough. By providing a seal at the edges of the sealing panel, dust or powder is prevented from exiting the housing and polluting the environment. The seal also prevents polluting materials finding their way into the interior of the housing from outside.

One embodiment of the pressure relief device according to the invention is **characterised in that** the sensor device comprises an electronic sensor having a measuring frequency of at least 100 measurements per second, preferably at least 150 measurements per second, more preferably at least 250 measurements per second.

If measurements are made in quick succession, the development of the pressure over time can be determined by measuring the deformation speed of the deformable zone. Every substance or mixture of substances has an explosion characteristic in which the pressure build-up during an explosion can vary. The development of the pressure over time is compared with the known explosion characteristic of the substance or the mixture of substances, making it possible to give a prognosis regarding the moment of explosion. Thus, the sealing panel can already be opened by means of the pressure relief device before the explosion occurs so as to decrease the pressure in the space and prevent damage to the housing.

One embodiment of the pressure relief device according to the invention is **characterised in that** the sensor device comprises a strain gauge.

A strain gauge is an analog version of the device for determining the deformation of the deformable zone. When the pressure exceeds a predetermined value, the release device can be activated.

One embodiment of the pressure relief device according to the invention is **characterised in that** the pressure relief device comprises at least one hinge, a first hinge part of which is mounted on the sealing panel and a second hinge part of which is mounted on the pressure relief device, and which first hinge part and second hinge part are disposed separate of each other, some distance apart, in the closed position of the sealing panel.

Disposing the first hinge part and the second hinge part separate of each other, some distance apart, obviates the need to add a hinge pin that is relatively easy to bend. Placement separate of each other, some distance apart, is furthermore advantageous because in this way contamination cannot lead to the device functioning less well, or not at all, in the long run.

After the sealing panel has been unlocked, the sealing panel is moved in the direction of the side remote from the enclosed space under the influence of the overpressure in the housing. Said movement may be a translatory movement by which the moving sealing panel releases a gap through which part of the overpressure present in the housing can escape.

During the translatory movement of the sealing panel, the first hinge part will come into contact with the second hinge part. Said contact takes place on a tangent defined by the two hinge parts. After contact has been made between the two hinge parts, the sealing panel and the first hinge part connected thereto will make a rotary movement around the tangent defined by the two hinge parts.

All this will be explained with reference to the following figures, in which:
Figure 1 is a perspective side view of the pressure relief device according to the invention in the closed position;
Figure 2 is a perspective side view of the pressure relief device of figure 1 in the open position;
Figure 3 is a detail view of a sensor device of the pressure relief device according to the invention;
Figure 4A is a detail view of a release device, in the closing position thereof, of the pressure relief device according to the invention;
Figure 4B is a detail view of a release device, in the release position thereof, of the pressure relief device according to the invention;
Figure 5A is a detail view of a sealing panel and hinge in a closed, locked position;
Figure 5B is a detail view of a sealing panel and hinge in a closed, unlocked position; and
Figure 5C is a detail view of a sealing panel and hinge in the open position.

Like parts are indicated by the same numerals in the figures.

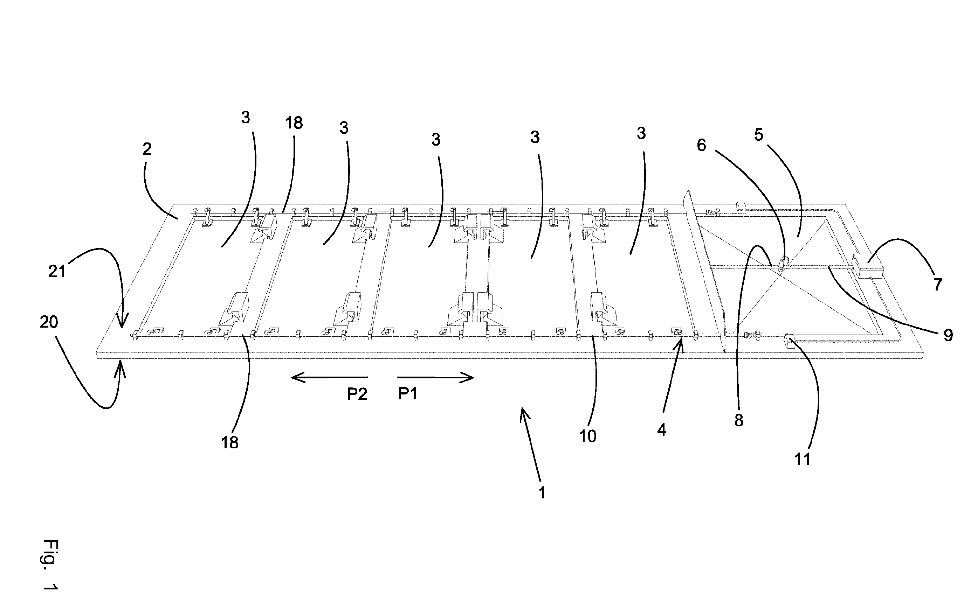

Figure 1 shows a pressure relief device 1 according to the invention, which forms part of a housing (not shown) that bounds a space. The pressure relief device 1 comprises a side 20 facing the space enclosed by the housing and a side 21 remote from the enclosed space. In figure 1, the pressure relief device 1 is shown in the closed position. The pressure relief device 1 comprises a framework 2 in which a number of sealing panels 3 are mounted. The sealing panels 3 are locked to the framework 2 by means of a release device 4. The sealing panels 3 completely close openings 12.

The pressure relief device 1 further comprises a deformable zone 5 and, mounted above said zone, a holder 8 for a sensor device 6. The sensor device 6 is connected to a control unit 7 via a cable 9.

The control unit 7 is in turn connected to a release device 4. The release device 4 is provided with a release mechanism 10 and an electromagnetic control unit 11.

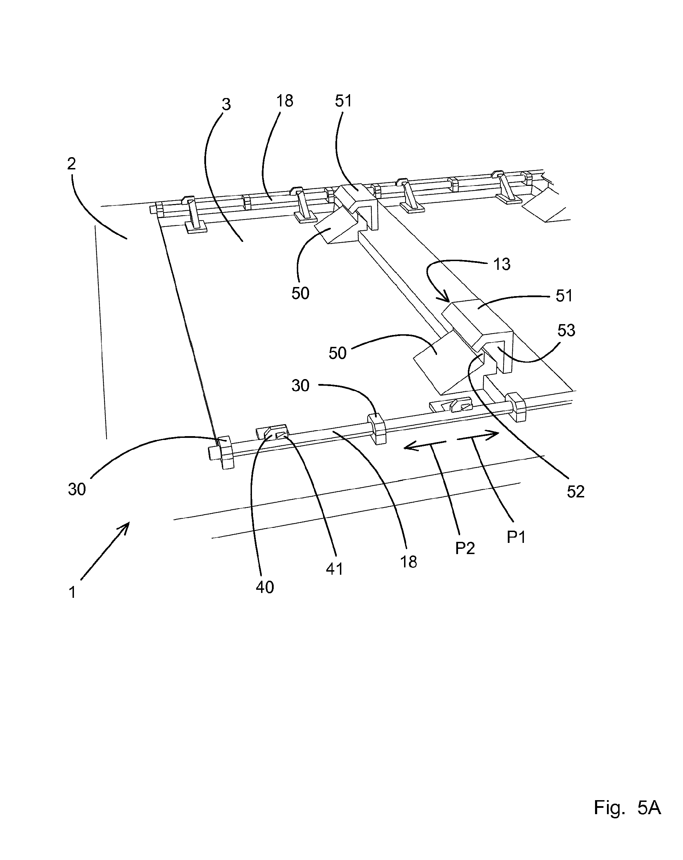

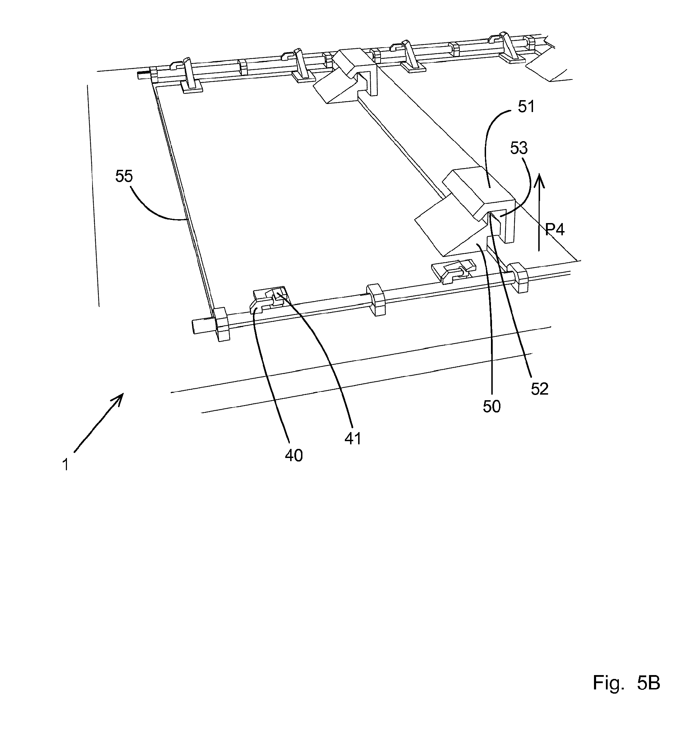

The release mechanism 10 comprises two rods 18 extending on either side of the sealing panels 3. An enlarged detail of a sealing panel 3 in the closed position thereof is shown in figure 5A. The rods 18 are mounted in guide parts 30 on a frame 2. Locking means 40 are attached to the rods 18 at regular intervals. Said locking means 40 are in contact with a locking part 41, which is fixedly disposed on the sealing panel 3. The rods 18 are movable in two opposite directions, indicated by arrows P1 and P2 in figure 1 and figure 5A. By moving the rods 18 in the direction P2, the locking engagement is released (as shown in figure 5B), and by moving the rods 18 in the opposite direction P1, a locking engagement is effected (as shown in figure 5A).

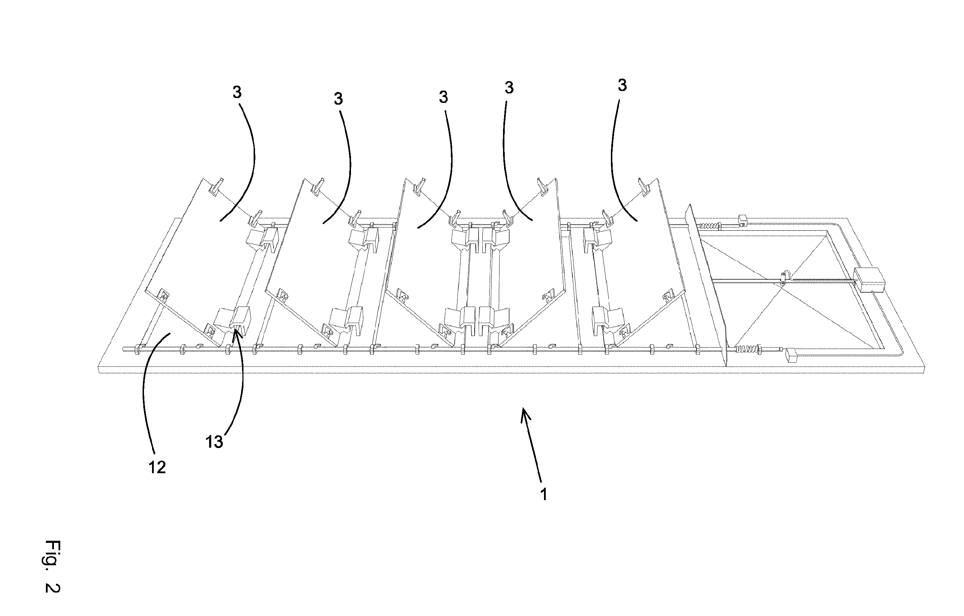

Figure 2 shows the pressure relief device 1 in the open position, which comprises the framework 2 in which a number of sealing panels 3 are mounted, which sealing panels can hinge about hinges 13. The framework 2 comprises a first part of the hinges 13, whilst a second complementary part of the hinges 13 is attached to the sealing panel 3.

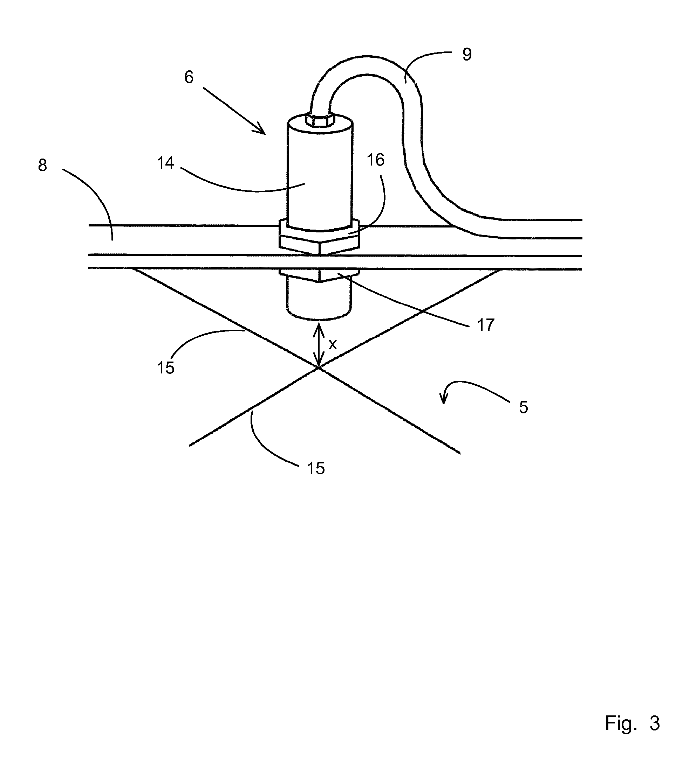

Figure 3 shows a detail view of the sensor device 6 of the pressure relief device 1. The pressure relief device 1 comprises a deformable zone 5 which, in the undeformed condition thereof, is a flat surface in which lines 15 extend. The sensor device 6 is mounted on a bar-shaped holder 8 by means of two nuts 16, 17. By means of the holder 8, the sensor device 6 is disposed at least substantially in the centre of the deformable zone 5. The sensor device 6 comprises an electronic measuring sensor, by means of which the distance x is measured many times per second. Preferably, the measurement is carried out at least 100 times per second, more preferably 150 times per second and even more preferably at least 200 times per second.

The distance x is the distance between the sensor device 6 and the deformable zone 5. The measuring values of the sensor device 6 are transmitted to the control unit 7 mounted on the frame 2 via a cable 9.

When the pressure in the housing increases, the pressure on the side 20 of the deformable zone 5 that faces the enclosed space will increase. As a result, the deformable zone 5 will start to deform and bulge out, as a result of which the distance x between the sensor device 6 and the deformable zone 5 will decrease.

The control unit 7 will receive the measuring values from the sensor device 6 and compare them with reference values stored in the control unit 7. Every dust mixture that may be present in the housing has its own explosion characteristics, and consequently the reference values can vary for each dust mixture.

As soon as a reference value is exceeded, the control unit 7 will deliver a signal to the release device 4. In another case, the speed at which the pressure increases may exceed a predetermined reference value for pressure increase. In the latter case, the control unit 7 may preventively send a signal to the release device to open the sealing panels 3 even before the reference value for a maximum pressure in the housing is exceeded. In most cases, the control unit 7 will be an electronic control unit which is connected to other components via a wired or wireless connection.

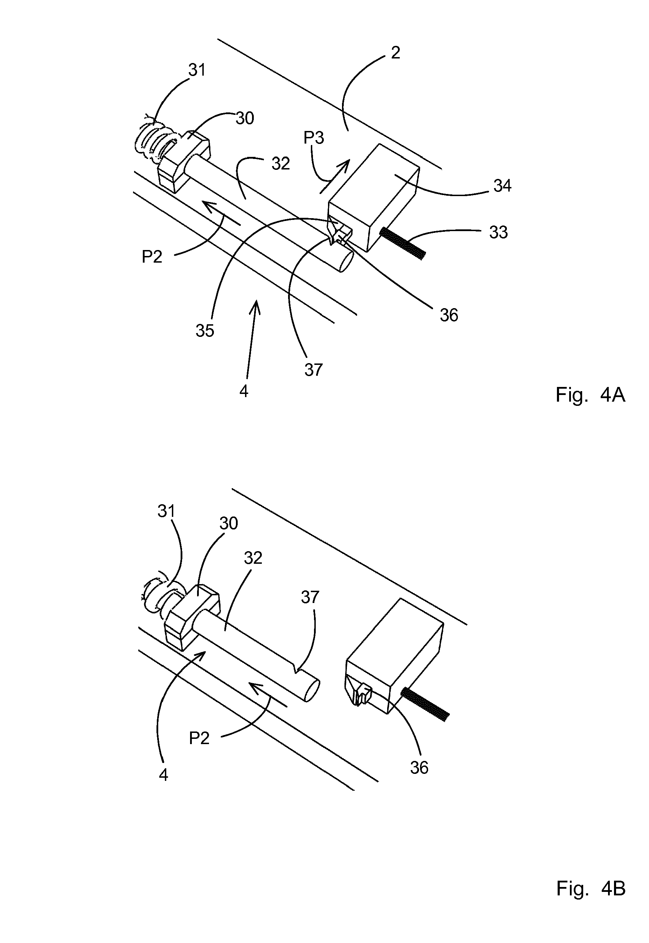

Figure 4A shows a detail view of a release device 4, in the closing position thereof, of the pressure relief device 1 according to the invention. The release device 4 is mounted on the frame 2 of the pressure relief device 1. An electromagnet 34 is connected to the frame 2. The electromagnet 34 is controlled via a cable 33, which is connected to the electromagnet 34 with one end and to the control unit 7 with the other end.

The release mechanism is provided with a pawl 35, which is movable in a direction indicated by arrow P3 by means of the electromagnet. A pawl end 36 of the pawl 35 is in engagement with a recess 37 of the rod 18. When the pawl 35 is moved in the direction indicated by arrow P3, the pawl end 36 of the pawl 35 will be removed from the recess 37 in the end 32 of the rods 18 of the release mechanism 10. As a result, the end 32 and the entire release mechanism will move in the direction indicated by arrow P2 under the influence of spring force from the spring 31. The spring force occurs because the spring 31 is biased against a guide part 30 mounted on the frame 2 in the closed position.

Figure 4B shows a detail view of a release device 4 in the release position of the pressure relief device 1. In the release position, the spring 31 is no longer biased, but it is in a relaxed position. The end 32 of the release mechanism 10 has been moved in the direction indicated by arrow P2 and the recess 37 in the end 32 is no longer in engagement with the pawl end 36.

Figure 5A is a detail view of a sealing panel 3 and hinge 13 in the closed position, which clearly shows that the release mechanism 10 comprises a rod 18 provided with locking means 40. In the closed position, said locking means 40 engage locking parts 41 provided on the sealing panels 3 and press the sealing panels 3 closed so as to prevent egress of powder and/or dust present in the housing. In the closed position of the sealing panel 3, the hinge part 50 mounted on the sealing panel 3 is not in contact with the hinge part 51 that is mounted on the frame 2.

The first hinge part 50, which is mounted on the sealing panel, has a pointed upper side 52 adapted for engaging in an upside-down groove 53 of the second hinge part 51, which is mounted on the frame.

Figure 5B is a detail view of a sealing panel 3 and hinge 13 in the unlocked position. In the unlocked position, immediately after release has taken place, the locking means 40 is no longer in contact with the locking part 41. The overpressure in the housing exerts a pressure in the direction indicated by arrow P4. As a result, a gap 55 is formed. Through the gap 55 between the frame 2 and the sealing panel 3, part of the overpressure can escape.

As a result of the overpressure, the sealing panel 3 is moved in a translatory movement. The translatory movement continues until the first hinge part 50 mounted on the upper side of the sealing panel 3 comes into contact via the upper side 52 thereof with the groove 53 of the second hinge part. Following that, a rotary movement occurs.

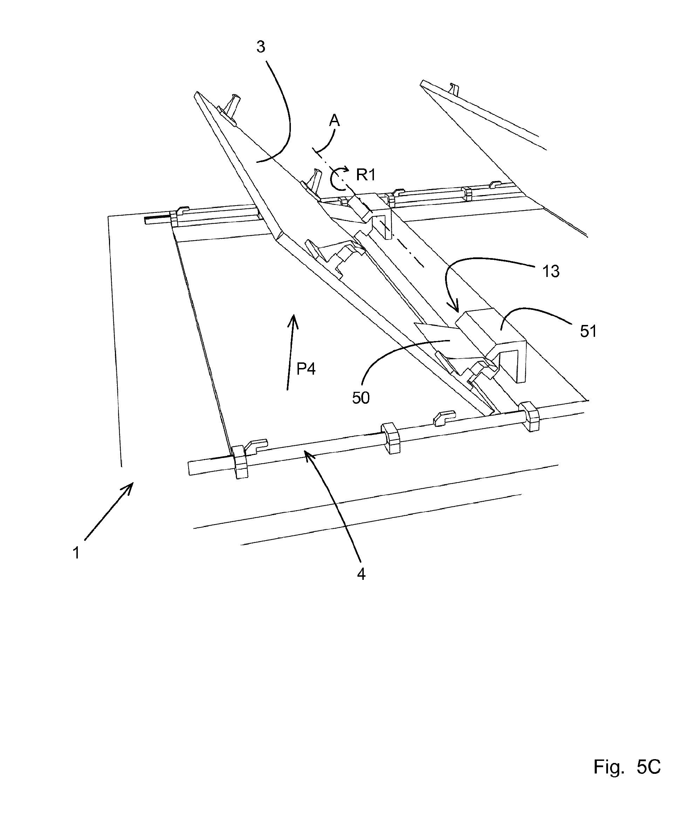

Figure 5C is a detail view of a sealing panel 3 and hinge 13 in the open position. In this position, the release device 4 is unlocked and the pressure in the housing is so large that the sealing panel 3 is pressed upward in the direction indicated by the arrow P4 and subsequently rotated in the direction R1 about the imaginary axis A in the hinge 50, 51, which imaginary axis is formed by the tangent line between the first hinge part 50 and the second hinge part 51.

The sealing panel 3 remains open until the pressure decrease has taken place. After the pressure has decreased and the sealing panel 3 has fallen back into its position under the influence of its own weight, the pressure relief device 1 can be reset in a simple manner by correctly positioning the sealing panels 3, biasing the spring 31 and locking the release device 4.

The sealing panels 3 can be formed in such a manner that an overpressure to be released and/or flames can be diverted in a predetermined direction in case of an explosion. Flames that may exit from the openings 12 can be fought by changing the length/width ratio of the sealing panels 3, so that a flammable gas mixture exiting the device will be cooled upon flowing past the open sealing panels. To that end the sealing panels must have sufficient mass, however.

All constructional parts of the pressure relief device 1 will be intact after an explosion that may occur and need not be replaced, therefore. As a result, a user of the pressure relief device 1 will experience hardly any interruption, if at all, of his production process.

## Claims

1. A pressure relief device (1) for protecting a housing against overpressure in a space enclosed by the housing, comprising at least one sealing panel (3) which, in use, has a side facing the enclosed space and a side remote from the enclosed space, which sealing panel (3) is movable between a first, closed position and a second, open position, in which closed position an opening in the housing can be closed by means of the sealing panel (3), **characterised in that** the pressure relief device comprises a zone (5) that can be deformed by overpressure in the space enclosed by the housing, a sensor device (6) for determining a deformation and/or a deformation speed of the deformable zone (5), which sensor device (6) is located on a side of the deformable zone (5) remote from the enclosed space, and a release device (4) connected to the sensor device (6) for unlocking the sealing panel (3) when the deformation and/or the deformation speed of the deformable zone (5) exceed(s) a predetermined reference value.

2. A pressure relief device (1) according to claim 1, **characterised in that** the deformable zone (5) comprises a cloth or a plate.

3. A pressure relief device (1) according to the claim 1 or 2, **characterised in that** the release device (4) is provided with a rod (18) that is held in a closing position by spring force and with a locking pawl (36) that is connected to the rod (18) in a locking position.

4. A pressure relief device (1) according to any one of the preceding claims, **characterised in that** the release device (4) comprises an electromagnetic control unit (34).

5. A pressure relief device (1) according to any one of the preceding claims, **characterised in that** the pressure relief device (1) comprises a control device (7) for receiving and processing sensor signals and emitting control signals to the release device (4).

6. A pressure relief device (1) according to any one of the preceding claims, **characterised in that** the sealing panel (3) comprises at least one seal for preventing the egress of dust from the space enclosed by the housing.

7. A pressure relief device (1) according to any one of the preceding claims, **characterised in that** the sensor device comprises an electronic sensor (6) having a measuring frequency of at least 100 measurements per second, preferably at least 150 measurements per second, more preferably at least 250 measurements per second.

8. A pressure relief device (1) according to any one of claims 1-6, **characterised in that** the sensor device comprises a strain gauge.

9. A pressure relief device (1) according to any one of the preceding claims, **characterised in that** the pressure relief device comprises at least one hinge, a first hinge part (50) of which is mounted on the sealing panel (3) and a second hinge part (51) of which is mounted on the pressure relief device, and which first hinge part (50) and second hinge part (51) are disposed separate of each other, some distance apart, in the closed position of the sealing panel (3).
